# EUROPEAN PATENT APPLICATION

(11) **EP 4 105 261 A1**
(43) Date of publication of application: **21.12.2022**
(21) Application number: 22175416.1
(22) Date of filing: 25.05.2022
(51) Int. Cl.: C08G 73/10, C09D 179/08

(54) **NEW NON-TOXIC POLYIMIDE SOLUTIONS**

(30) Priority: 14.06.2021 EP 21179346
(71) Applicant: Evonik Fibres GmbH, 4861 Schörfling am Attersee (AT)
(72) Inventor: Harvey, Leonard W, Downingtown, PA, 19335 (US); Beer, Stephan, 4863 Seewalchen am Attersee (AT)
(74) Representative: Evonik Patent Association

(57) **Abstract**

The invention relates to new polyimide solutions having ecological and toxicological benefits compared to existing polyimide solutions as well as well as to their use, in particular for coating applications.

## Description

The invention relates to new polyimide solutions having ecological and toxicological benefits compared to existing polyimide solutions as well as to their use, in particular for coating applications.

Several soluble aromatic polyimides have been developed and are commercially available for different applications. WO2011/009919A1 for example discloses several soluble polyimides of the P84^{®} type as well as processes for their production and their use to manufacture membranes. According to WO2011/009919A1 P84^{®}type polyimides can be dissolved in DMF (dimethyl formamide), DMAc (Dimethylacetamid), NMP (N-Methyl-2-pyrrolidon), NEP (N-Ethyl-2-pyrrolidon), Sulfolan (Tetrahydrothiophen-1,1-dioxid) and DMSO (dimethyl sulfoxide).

Solvents of highest commercial relevance for polyimides are DMF, DMAc, NMP and NEP. These solvents, however, are classified CMR (Carcinogenic, Mutagenic and Reprotoxic) substances. DMF and NMP are in addition listed on the SVHC (Substances of Very High Concern) candidate list. As consequence, processing, i.e. manufacture, transport and use, of polyimide solutions comprising such solvents is subject to strict safety requirements. In fact, these limitations are a serious problem for many potential customers, in particular small and mid-size companies.

Due to the ecological, toxicological and administrative problems caused by NMP as solvent for polyimide or polyamidimide resins, paint manufacturers are looking for alternatives. DE 10 2014 104 223 A1 for example suggests use of 3-methoxy-N, N-dimethylpropane amide as a solvent in paint applications instead of NMP.

Among the solvents listed in WO2011/009919A1, DMSO is a less critical alternative. There are, however, a number of disadvantages for processing solutions of polyimides in DMSO. On the one hand, the high melting temperature of 18°C may lead to freezing-out of the polyimide solutions in DMSO, for example during transport. On the other hand, P84^{®} solutions in DMSO show a poor storage stability in air. In contact with humidity, phase inversion due to water absorption occurs within a short time (< 1h). Phenomenologically, this can be perceived by the formation of a white, firm skin on the surface of the solution. Especially for coating applications, this prohibits use of polyimide solutions in DMSO.

US 2004/0266979 discloses a process for producing solvent soluble polyimides. Polyimides are produced by polycondensing at least one tetracarboxylic acid component with at least one diamine component in a solvent in the presence of a tertiary amine as catalyst. Analogue to WO2011/009919A1 the list of solvents that can be used comprises the CMR classified compounds DMF (dimethyl formamide), DMAc (dimethylacetamid), NMP (N-methyl-2-pyrrolidon), hexamethylphosphoramid, sulfolan, but also DMSO (dimethyl sulfoxide). According to the examples of US 2004/0266979 an inhomogeneous reaction mixture is obtained at the end of the polycondensation reaction. Large amounts of DMAc were added to the reaction mixture after completion of the polycondensation to obtain a uniform solution. Without use of DMAc as main solvent no uniform solution was obtained in US 2004/0266979. As consequence, US 2004/0266979 suffers from the same disadvantages as described for WO2011/009919A1 before.

US 6,916,772 B2 discloses compositions for stripping photoresist compounds, such as polyimides, from substrates, comprising: a) about 5% to about 50% by weight of an alkyl substituted pyrrolidone, an alkyl substituted piperidone, or a mixture thereof, b) about 0.2% to about 20% of one or more alkanolamines, and c) about 50% to about 94% of a sulfoxide, a sulfoxane, or mixture thereof. Most of the compositions disclosed in US 6,916,772 B2 comprise the CMR classified solvent NMP. The solvent used in US'772 therefore causes the same ecological, toxicological and administrative problems as discussed before. US 6,916,772 B2 does not provide no hint that the polyimide solutions disclosed therein can be used for coating applications or that the polyimide solutions solve any of the problems solved by the present invention. US 6,916,772 B2 relates to a totally different technical field.

As consequence, a strong demand exists for new solvents or solvent mixtures for polyimides, in particular for aromatic polyimides.

The problem to be solved by the present invention was to provide a new polyimide solution respectively new solvents or solvent mixtures for polyimides, not having the disadvantages of the polyimide solutions of the prior art or having such disadvantages only to a reduced degree. Further problems were to provide a process for manufacture such new polyimide solutions as well as to enable the use of the new polyimide solutions in different application fields, in particular in coating applications.

A first particular problem to be solved by the present invention was to provide new solvents or solvent mixtures for polyimides. Preferably these new solvents or solvent mixtures shall be less toxic and /or having beneficial ecological properties compared to solvents used in commercially available polyimide solutions at the time the invention was made respectively compared to polyimide coating solutions disclosed in the prior art cited above. Preferably use of CMR substances should be reduced or avoided.

A second particular problem to be solved by the present invention was to provide new solvents or solvent mixtures for polyimides allowing to produce polyimide solution with good storage stability in air, preferably with improved storage stability in air compared to solutions in pure DMSO, more preferred having a skin formation time if stored in air of at least 2 hours, even more preferred at least 4 hours, particular preferred at least 6 hours and most preferred of at least 8 hours.

A third particular problem to be solved by the present invention was to provide new solvents or solvent mixtures allowing to produce, transport and use polyimide solutions at a broad temperature range, in particular at low temperatures, especially at temperatures below 0°C.

A fourth particular problem to be solved by the present invention was to provide new solvents or solvent mixtures for polyimides having high solubility, i.e. allow to produce polyimide solutions with a high solid content and more preferred also with a low viscosity.

A fifth particular problem to be solved by the present invention was to provide new solvents or solvent mixtures for polyimides allowing to produce polyimide solution which can be used in a wide variety of applications, especially in coating applications. Preferably it should be possible to obtain high quality coatings with good performance properties.

A sixth particular problem to be solved by the present invention was to provide new solvents or solvent mixtures for polyimides allowing to produce, transport and use polyimide solutions with less safety and administrative requirements.

Further problems not mentioned before will become obvious in view of the subsequent description, examples and claims.

The inventors surprisingly found out that a solvent mixture comprising DMSO and co-solvents as defined in claim 1 or one of the dependent claims can be used to produce polyimide solutions that solve the problems of the present invention.

The solvent mixture of the present invention can be used to dissolve polyimides, in particular aromatic polyimides, without use of any CMR and SVHC classified substances, like NMP, NEP, DMAc and DMF as solvent or co-solvent, and are itself not classified as toxic.

Even though the solvent mixtures of the invention are based on DMSO, the formulations, i.e. polyimide solutions, of the present invention show significantly better properties in processing than polyimide solutions in pure DMSO. Melting points below 0°C down to -24°C were achieved, which allows to produce, transport and use polyimide solutions of the invention in regions with very low temperature.

Even after a duration of 2 up to more than 8 hours in air, inventive polyimide formulations do not show any adverse skin formation if in contact with humidity.

Solutions with a polyimide content of at least 25% by weight with good or even very good, i.e. low, viscosity were obtained.

Further benefits not mentioned before will become obvious in view of the subsequent description, examples and claims.

Subject of the present invention is a polyimide solution of claim 1, a process for manufacture the polyimide solution according to claim 13 or 14 and the use of the inventive polyimide solution according to claims 16 or 17. Preferred embodiments are claimed in the dependent claims.

The terms "polyimide solution" and "polyimide formulation" are used synonymously in the present invention and relate to a formulation comprising a solvent mixture and at least one polyimide, wherein the term "solution" means that the polyimide(s) is/are dissolved in the solvent mixture and no undissolved polyimide particles are visible for the naked eye.

The present invention provides polyimide solution comprising
a) One or more polyimides, preferably aromatic polyimides, and
b) A solvent mixture comprising
   a. 55 to 90 wt. % dimethylsulfoxide,
   b. in sum 0.1 to 20 wt. % of one or more primary, secondary and/or tertiary alkanolamine(s) having, 3 to 15, preferably 4 to 10, more preferred 4 to 9 carbon atoms,
   c. 0 to 40 wt. % benzyl alcohol,
   d. 0 to 25 wt. % cyclohexanone,
   e. 0 to 15 wt. % xylene,
   f. in sum 0 to 20 wt. % of acetophenone and/or an alkylene carbonate,
   g. 0 to 5 wt. % propylene glycol,
   h. in sum 0 to 10 wt. % DMF, NEP, NMP and/or DMAc
   i. optionally further co-solvents,

   wherein the weight percentages given for components a. to i. relate to the total weight of the solvent mixture b),
      and
   wherein the amounts of components a. to i. are selected such that they total in sum to 100 wt. % of the solvent mixture.

Preferably the amounts of the components a. to h. are selected such that they total in sum to 100 wt. % of the solvent mixture, i.e. no further co-solvents i. are comprised.

As polyimide a), aliphatic or aromatic polyimides can be used. Preferably aromatic polyimides are used. Aromatic polyimides, preferably made from dianhydrides and diisocyanates respectively diamines, as well as methods for their manufacture are known to a man skilled in the art. Homo-, random-, or copolymers or mixtures or blend of different polyimide polymers may be used. All kinds of solvent soluble aromatic polyimides can be used in the present invention.

As described before, especially in the prior art section, a strong demand exists for solvents or solvent mixtures for aromatic polyimides, being free of respectively having a very low content of solvents being classified as CMR and of SVHC substances. As shown in the examples below, the solvent mixture of the present invention fulfills these requirements and show excellent performance in combination with aromatic polyimides comprising at least 80 mol% aromatic monomers. It is thus preferred that the inventive polyimide solutions comprise as polyimide component a) a polyimide comprising 80 to 100% aromatic monomers, more preferred comprising 90 to 100% aromatic monomers, even more preferred comprising 95 to 100% aromatic monomers, particular preferred comprising 97 to 100% aromatic monomers and most preferred comprising 100% aromatic monomers.

Preferably the aromatic polyimide(s) comprise(s) identical or different recurring units of Formula (1) 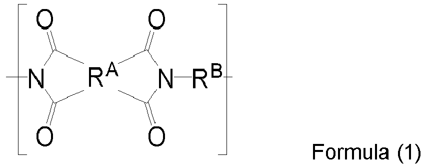 wherein
the functional group R^{A} represents one or more, identical or different moieties selected from the group consisting of the moieties R^{A1}, R^{A2} and R^{A3} 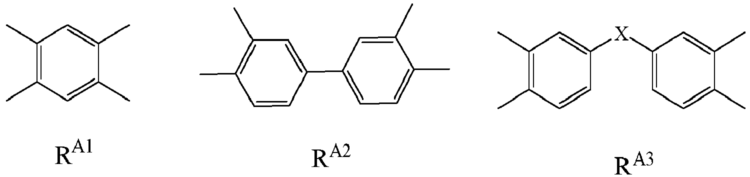 where 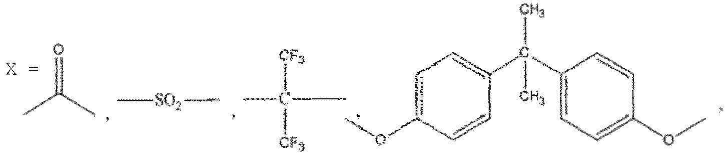 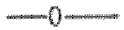
the functional group R^{B} represents one or more, identical or different moieties selected from the group consisting of the moieties R^{B1}, R^{B2} and R^{B3} 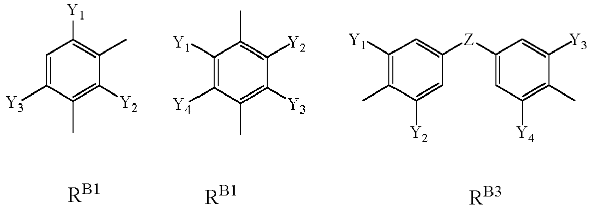
wherein Y₁, Y₂, Y₃ and Y₄ are either H or CH₃ or alkyl radicals with 2 to 4 carbon atoms and Z = - CH₂-, -(CH₃)₂C-, SO₂. -(CF₃)C-. -CO-, -COO-, -CONH-, -O-.

More preferred the polyimide(s) a) is/are prepared by reacting
a dianhydride, selected from the group consisting of 3,4,3',4'-benzophenonetetracarboxylic acid dianhydride (BTDA), 1,2,4,5-benzenetetracarboxylic acid dianhydride (PMDA), 3,4,3',4'-biphenyltetracarboxylic acid dianhydride (BPDA),1,1,1,3,3,3-hexafluoro-2,2-propylidenediphthalic acid dianhydride (6-FDA), 4,4'-Oxydiphthalic acid dianhydride (ODPA), 3,3',4,4'-Diphenylsulphone tetracarboxylic acid dianhydride (DSDA), and mixtures thereof
   with
a diisocyanate, selected from the group consisting of toluene-2,4-diisocyanate (2,4-TDI), toluene-2,6-diisocyanate (2,4-TDI), 4,4'-methylenediphenyl-diisocyanate (MDI), 2,4,6-trimethyl-1,3-phenylenediisocyanate (MesDI), 2,3,5,6-tetramethyl-1,4-phenylenediisocyanate, diethylmethylbenzenediisocyanate and mixtures thereof in a dipolar aprotic solvent to obtain the polyimide,
   or
a diamine, selected from the group consisting of toluene-2,4-diamine (2,4-TDA), toluene-2,6-diamine (2,6-TDI), 4,4'-methylenediphenyl-diamine (MDA), 2,4,6-trimethyl-1,3-phenylenediamine (MesDA), 2,3,5,6-tetramethyl-1,4-phenylenediamine, diethylmethylbenzenediamine and mixtures thereof, in a dipolar aprotic solvent to obtain the polyamic acid. In this case a polyamic acid is formed as intermediate and later-on imidized

Even more preferred
at least 90 mol-% of building blocks R^{A} are 3,3',4,4'-benzophenonetetrayl and at least 90 mol-% of building blocks R^{B} are 2,4-toluenediyl, 2,6-toluenediyl or 4,4'-methylenediphenyldiyl, with a molar ratio of 2,4-toluenediyl to 2,6-toluenediyl of from 1 : 9 to 9 : 1 and a molar ratio of the combined amount of 2,4-toluenediyl and 2,6-toluenediyl to the amount of 4,4'-methylenediphenyldiyl of from 70 : 30 to 100 : 0
   or
at least 90 mol-% of building blocks R^{A} are 3,3',4,4'-benzophenonetetrayl or 1,2,4,5-phenylenetetrayl, with a molar ratio of 3,3',4,4'-benzophenonetetrayl to 1,2,4,5-phenylenetetrayl of from 50 : 50 to 95 : 5, preferably of from 55 : 45 to 65 : 35, and at least 90 mol-% of building blocks R^{B} are 2,4-toluenediyl or 2,6-toluenediyl, with a molar ratio of 2,4-toluenediyl to 2,6-toluenediyl of from 1 : 9 to 9 : 1

In a first particular preferred embodiment of the invention the polyimides having the following structure according to Formula (2): 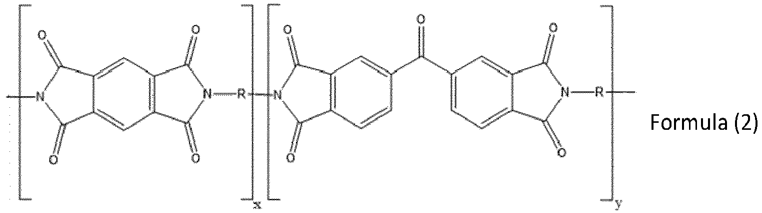 where 0 ≤ x ≤ 0.5 and 1 ≥ y ≥ 0.5, the sum of x and y = 1 and R represents one or more, identical or different moieties selected from the group consisting of the moieties L1, L2, L3 and L4.

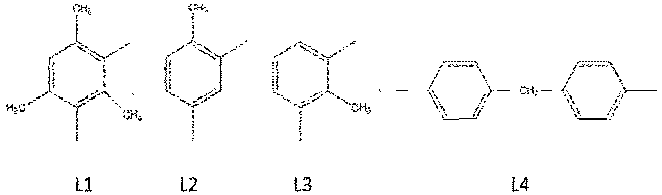

The polyimide is very particularly preferably a polymer according to Formula (2) where x = 0, y = 1 and R consists of 64 mol% L2, 16 mol% L3 and 20 mol% L4. Such solvent soluble polyimide is known as P84^{®} or P84^{®} type 70 and has the following CAS number: 9046-51-9.

Also, very particular preferred the polyimide of Formula (2) is a polymer having the composition x = 0.4, y = 0.6 and R consists of 80 mol% L2 and 20 mol% L3. This solvent soluble polyimide is known as P84^{®} HT or P84^{®} HT 325 and has the following CAS number: 134119-41-8.

Details regarding the production of these and further similar polyimides according to Formula (2) can be extracted from WO 2011/009919 A1, the whole content of the documents is hereby explicitly incorporated in the description of the present invention by reference. All polymers described in the examples of WO 2011/009919 A1 are particularly preferably used in the process of the present invention.

DE 21 43 080 describes the manufacture of solvent soluble polyimides made from BTDA and mixtures of toluene-2,4-diisocyanate, toluene-2,6-diisocyanate and 4,4'-methylenediphenyl-diisocyanate. It also describes the manufacture of solvent soluble polyamic acid from BTDA and mixtures of toluene-2,4-diamine, toluene-2,6-diamine, 4,4'-methylenediphenyl-diamine as well as the subsequent imidation to the corresponding polyimide. Details regarding the production of these and further similar polyimides and polyamic acids can be extracted from DE 21 43 080, the whole content of both documents is hereby explicitly incorporated in the description of the present invention by reference. All polymers described in the examples of DE 21 43 080 are particularly preferred used in the process of the present invention.

Further preferred polyimides that can be used in the present invention are block-copolyimides, i.e. copolymers comprising, preferably consisting of, the blocks (A) as per the ensuing formulae (3), and (B) as per the ensuing formulae (4):

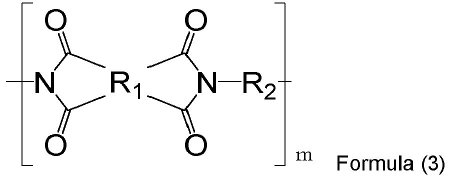

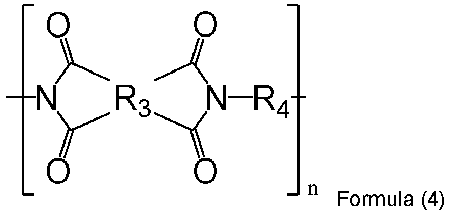

Said blocks A and B have a differing composition, i.e. the pairs R₁ and R₃ on the one hand and R₂ and R₄ on the other cannot each be identical at one and the same time.

The block copolyimide comprises a continuous phase of block A. The functional group R₁ therein comprises either or both of the following functional groups:

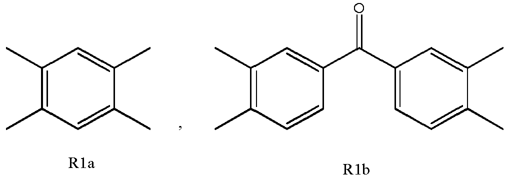

R₂ comprises at least one or 2 or 3 of the following functional groups

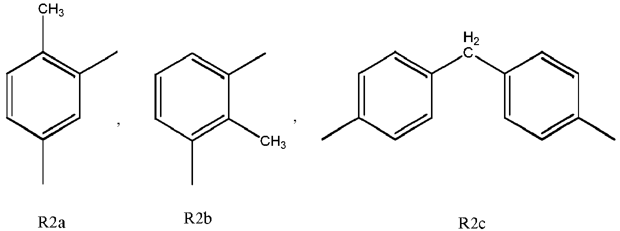

Block A has the following compositions in embodiments that are most preferable:
AF1: 100 mol% R₁b and 64 mol% R₂a, 16 mol% R₂b and 20 mol% R₂c.
AF2: 40 mol% R₁a, 60 mol% R₁b and 80 mol% R₂a, 20 mol% R₂b.

The recited mole percentages relate to the functional groups R₁ and R₂ such that the amounts of the various units are each selected such that the sum is 100 mol% for each of these groups.
. R₃ in block B comprises at least one or more of the following functional groups: 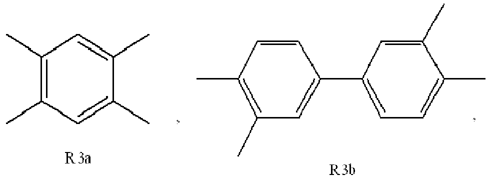 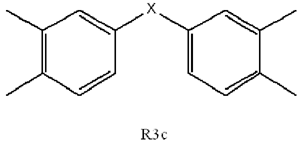 where 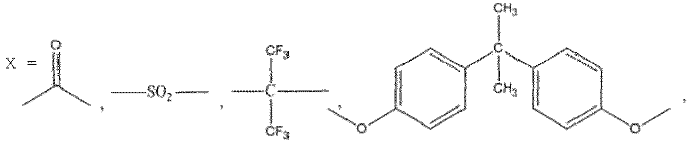 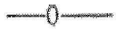
R4 comprises at least one or more of the following functional groups 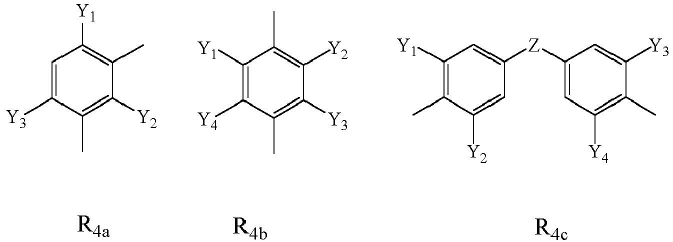
where Y₁, Y₂, Y₃ and Y₄ are either H or CH₃ or alkyl radicals with 2 to 4 carbon atoms and Z = - CH₂-, -(CH₃)₂C-, SO₂. -(CF₃)C-. -CO-, -COO-, -CONH-, -O-, with the proviso that at least one of the radicals Y₁ to Y₄, preferably at least two of the radicals Y₁ to Y₄, more preferably at least three of the radicals Y₁ to Y₄ and most preferably all the radicals Y₁ to Y₄ are equal to CH₃ or a C₂ to C₄ alkyl radicals.

Z in R_{4c} is preferably -CH₂-, - (CH₃)₂C-, -(CF₃)₂C- or-O-, more preferably Z = -CH₂- or-(CH₃)₂C-. It is very particularly preferable for R₄c to have the following composition: Y₁, Y₂ and Y₃ = H, Y₄= CH₃ or a C₂ to C₄ alkyl radical and Z = -CH₂- or -(CH₃)₂C- or, respectively, Y₁ and Y₃ = CH3 or a C₂ to C₄ alkyl radical, Y₂ and Y₄ = H or CH₃ and Z = -CH₂- or -(CH₃)₂C-. It is most preferable for R₄c to have the following composition: Y₁, Y₂, Y₃ and Y₄ = CH₃ or a C₂ to C₄ alkyl radical and Z = -CH₂- or -(CH₃)₂C-, preferably -CH₂-. It is most preferable for the radicals Y₁ to Y₄ in the abovementioned preferred embodiments to be CH₃ if they are not H.

In one particularly preferred embodiment, block (B) has the following composition:
- AF3:: 40 to 60 mol% R₃a, 0 to 10 mol% R₃b, 60 to 30 mol% R₃c and 90 to 100 mol% R₄a, 0 to 10 mol% R₄b and 0 to 10 mol% R₄c.
- AF4:: 50 mol% R₃a, 50 mol% R₃c and 100 mol% R₄a.

The mole percentages stated for AF3 and AF4 relate to the functional groups R₃ and R₄, respectively, in total, so the amounts of the various units are each selected such that they sum to 100 mol% for each of these groups.

Very particular preference is given to the combinations of the abovementioned AF1 and/or AF2 with AF3 and/or AF4. Combinations of AF1 or AF2 with AF4 are most preferable.

The block lengths n and m of blocks A and B are preferably in the range from 1 to 1000, more preferably in the range from 1 to 500, yet more preferably in the range from 1 to 200, yet still more preferably in the range from 5 to 150, yet still more preferably in the range from 10 to 100, yet still even more preferably in the range from 10 to 50 and most preferably in the range from 10 to 40.

The block lengths of blocks A and B may be the same or different. The block-copolyimide may further exhibit some distribution with respect to the particular block lengths of blocks A and B; that is, not all bocks A or all blocks B need to have the same length. The ratio between blocks A and B may thus be varied across a wide range. Proportions in the block copolyimide of this second preferred embodiment of the present invention may be from 5 to 90% for block B and from 10 to 95% for block A. Particular preference is given to the ratio of A: B = 80:20 or 70:30 or 60:40 or most preferably 50:50.

Details regarding the production of the block-copolyimides can be extracted from WO 2015/091122, the whole content of which is hereby explicitly incorporated in the description of the present invention by reference. All polymers described in the examples of WO 2015/091122 are particularly preferably used as polymer in the process of the present invention.

Further preferred polyimide(s) that can be used in the invention is/are selected from the group consisting of
- Matrimid 5128 (CAS No 104983-64-4, based on BTDA DAPI [Diaminophenylindane]) according to Formula 5 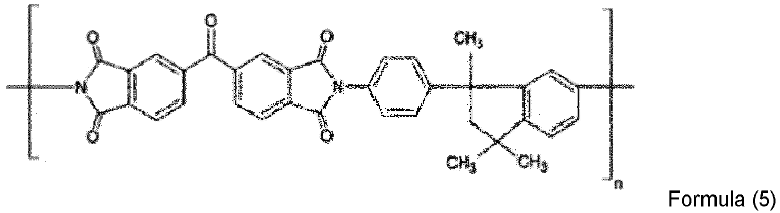 or one of its derivatives like Br-Matrimid,
- 6-FDA based polyimides as disclosed for example in Handbook of Specialty Fluorinated Polymers, 2015.

The solvent mixture b) of the invention comprises as main component a. dimethylsulfoxide (DMSO) in an amount of from 55 to 90 wt. %, preferably 55 to 85 wt. %, more preferred 60 to 80 wt. % of the total weight of the solvent mixture b). If the content of DMSO is too low, it was found that the solvent mixture has insufficient solubility for the polyimides. Depending on the solvent mixture only partial dissolution or only swelling of the polyimides was found. If the content is too high, the solubility can be very good, but the resulting polyimide solutions showed poor application properties, in particular a high melting temperature, resulting in potential freezing of the solution during transport.

As component b. the solvent mixture b) comprises one or more primary or secondary and/or tertiary alkanolamine(s) having 3 to 15, preferably 4 to 10, more preferred 4 to 9 carbon atoms, or a mixture thereof.

Inventors have found that if component b. is not comprised in the solvent mixture, either poor solubility or, if good solubility could be achieved, rapid skin formation in air within 1 hour was observed. It is possible but not preferred to provide a solvent mixture b) consisting of components a. and b. wherein a. and b. are comprised in amounts specified below. Inventors, however, found out that in terms of skin formation and melting point it is preferred that the solvent mixture b) comprises at least one, preferably at least two, more preferred at least three of components c. to e. as co-solvents. In this case, component b. can be used also in low amounts. If the content of component b. in solvent mixture b) is too high, the solubility of the solvent mixture decreases. It is, thus, preferred that component b. is comprised in the solvent mixture b) in sum in an amount of 0.1 to 20 wt. %, preferably 0.5 to 19 wt. %, more preferred 1 to 15 wt. %, even more preferred 2 to 13 wt. % of the total weight of the solvent mixture b).

Most preferred alkanolamines, in terms of solubility, application properties and toxicity classification, are selected from the group consisting of triethanolamine and 2-(dimethylamino)ethanol and mixtures thereof, wherein
- triethanolamine is preferably comprised in an amount of from 0 to 20 wt. %, preferably 0.1 to 15 wt. %, more preferred 1 to 14 wt. %, even more preferred 2 to 13 wt. % and most preferred 3 to 12 wt. %, based on the total weight of the solvent mixture b),
- 2-(dimethylamino)ethanol is preferably comprised in an amount of from 0 to 20 wt.% based on the total weight of the solvent mixture b). While in view of solubility a content of 2-(dimethylamino)ethanol in a range of 0 to 20 wt.% is possible and preferred the content of 2-(dimethylamino)ethanol is preferably reduced to 0.1 to 8 wt. %, more preferred 1 to 7 wt. %, even more preferred 2 to 6 wt. % and most preferred 3 to 5 wt. %, based on the total weight of the solvent mixture b), if, in addition to good solubility, it is desired to provide a mixture being classified as low or even non-toxic,
and wherein the amounts of triethanolamine and 2-(dimethylamino)ethanol are selected from the ranges given before such, that both components sum total to 0.1 to 20 wt. %, preferably 0.5 to 19 wt. %, more preferred 1 to 15 wt. %, even more preferred 2 to 13 wt. % of the solvent mixture b).

Component c., i.e. benzyl alcohol, can be used as co-solvent, too. Best results with regard to solubility and skin formation of the polyimide solution have been found if component c. is used in combination with components a. and b. respectively in combination with components a., b, and d.. Also combinations of components a., b., c., d. and e. can be used. It is therefore preferred if component c. is comprised in the solvent mixture b) in an amount of 0 to 40 wt. %, preferably 0.1 to 25 wt. %, more preferred 1 to 20 wt. % and even more preferred 2 to 15 wt. % of the total weight of the solvent mixture b).

Component d., i.e. cyclohexanone, can be used as co-solvent, too. Best results with regard to solubility and skin formation of the polyimide solution have been found if component d. is used in combination with components a. and b. or in combination with components a., b. and c. or if combinations of components a., b., c., d. and e. are used. It is, however, also possible to use solvent mixtures b) comprising components a., b., d., e. and f. It is therefore preferred if component d. is comprised in the solvent mixture b) in an amount of 0 to 25 wt. %, preferably 1 to 25 wt. %,more preferred 2 to 20 wt. % and even more preferred 2 to 15 wt. % of the total weight of the solvent mixture b).

Component e., i.e. xylene, can be used as co-solvent, too. Best results with regard to solubility and the application properties of the polyimide solution in coating applications have been found if component e. is used in combination with component a., b., c. and d. or combinations of components a., b. e. and f. are used. It is, however, also possible to use solvent mixtures b) comprising components a., b., d., e. and f. It is therefore preferred if component e. is comprised in the solvent mixture b) in an amount of 0 to 15 wt. %, preferably 0.1 to 10 wt. %, more preferred 0.5 to 8 wt. %, most preferred 1 to 5 wt. % of the total weight of the solvent mixture b).

Component f., i.e. acetophenone and/or an alkylene carbonate, can be used as co-solvent together with component a. and b., preferably it is used in combination with components a., b., d. and/or e., to obtain polyimide solutions with good solubility and application properties. Component f. in sum is preferably comprised in the solvent mixture b) in an amount of 0 to 20 wt. %, more preferred 1 to 15 wt. % and even more preferred 5 to 15 wt. % of the total weight of the solvent mixture b).

With regard to component g., i.e. propylene glycol, it has been found that this component is disadvantageous for the solubility of the solvent mixture for polyimides. Thus, component g. is comprised in the solvent mixture b) in a maximum amount of 5 wt. %, preferably 0.1 to 5 wt. %, more preferred 0.01 to 3 wt. %, even more preferred 0.001 to 1 wt. %, especially preferred 0 to 0.5 wt.%. Most preferred propylene glycol is not comprised, i.e. its content is 0 wt.% of the total weight of the solvent mixture b).

DMF, NEP, NMP and/or DMAc are critical solvents because they are classified as CMR and partially SVHC substances. Even though these co-solvents can be comprised in the solvent mixture in minor amounts, it is preferred that their amount is minimized and most preferred that these compounds are not comprised. In sum DMF, NEP, NMP and/or DMAc may be comprised in the solvent mixture b. as component h. in an amount of 0 to 10 wt. %, preferably 0 to 5 wt. %, more preferred 0 to 3 wt. %, even more preferred 0 to 1 wt.%, especially preferred 0 to 0.1 wt.% and most preferred 0 wt.% of the total weight of the solvent mixture b).

Optionally co-solvents i. can be comprised, preferably glycol ethers, especially propylene glycol ethers commercially available under the trade name Dowanol^{®}, for example ,1-methoxy-2-propanol (Dowanol^{®} PM) as component i. Preferably component i. is comprised in solutions specifically prepared for spray coating applications.

The solvent mixtures b) preferably comprises or consists of the following combination of components:
I) a., b. and c.
II) a., b. and d.
III) a., b., c. and d.
IV) a., b., c., d. and e.
V) a., b., e. and f.
VI) a., b., d., e. and f.
wherein the amounts of components a. and b. are selected from the ranges defined before and wherein the amounts of components c., d., e. and f., if comprised, are selected from the following ranges
c. 0.1 to 40 wt.%, preferably 0.1 to 25 wt. %, more preferred 1 to 20 wt. %, even more preferred 5 to 15 wt. %,
d. 1 to 25 wt. %, preferably 1 to 25 wt. %, and more preferred 2 to 20 wt. % and even more preferred 2 to 15 wt. %,
e. 0.1 to 15 wt. %, preferably 0.1 to 10 wt. %, more preferred 0.5 to 8 wt. %, most preferred 1 to 5 wt. %,
f. in sum 1 to 20 wt. %, preferably 1 to 15 wt. %, more preferred 5 to 15 wt. % of acetophenone and/or an alkylene carbonate, preferably propylene carbonate or ethylene carbonate, most preferred propylene carbonate.

In solvent mixtures consisting of components a. and b. or solvent mixtures comprising components a. and b. and optionally one or more of components c. to f., preferably in solvent mixtures I) to VI), each component a. to f. is comprised in an amount selected from the ranges defined above and the amount of each component is selected such that the amounts of the components in sum total to 100% of the solvent mixture b).

More preferred are combinations I), III) and IV) and most preferred combinations III) and IV).

To reduce transport costs and for ecological reasons it is preferred to reduce the amount of solvent mixture b) in the polyimide solution. Inventors have found that with the inventive solvent mixture b) high concentrated polyimide solutions with good, i.e. low, to acceptable viscosity, can be prepared. Preferably the polyimide solutions of the invention comprise in sum 5 to 35 wt.%, preferably 10 to 30 wt.% and more preferred 15 to 25 wt.%, referred to the overall weight of the polyimide solution, of polyimides(s) a). For higher polyimide contents a strong increase in viscosity was found.

Also preferred polyimide solution of the invention comprise component b) in an amount of 95 to 65 wt.%, preferably 90 to 70 wt.% and more preferred 85 to 75 wt.% of the overall weight of the polyimide solution.

In an alternative embodiment the polyimide solutions are used to prepare dispersions containing inorganic particles. The dispersions comprise as additional component c) one or more fillers, preferably selected from the group consisting of graphite, metal sulfides such as molybdenum disulfide and tungsten disulfide, metal oxides such as aluminum oxide, inorganic nitrides such as aluminum nitride, silicon nitride and hexagonal boron nitride, silica, abrasive particles such as cubic boron nitride, diamond. Fillers can be comprised in an amount of from 0 to 20 % by weight of the overall solid components of the dispersion. Solid of the dispersion means weight of the residue obtained after evaporation of all solvents at 230°C for 2.5 h in a vacuum oven. If fillers are comprised the above given amounts of components a) and b) are adapted accordingly.

The polyimide solutions of the invention can be prepared by a process comprising the steps
i. Providing one or more polyimide(s) a) as defined above
ii. Providing a solvent mixture b) as defined above
iii. Dissolving the polyimide(s) provided in step i. in the solvent mixture provided in step ii.

In an alternative embodiment the polyimide solutions of the invention can be prepared by a process comprising the steps
I. Providing one or more polyimide(s) a) as defined above
II. Dissolving the polyimide(s) provided in step I. partially or entirely in DMSO
III. Adding the remaining components of the solvent mixture b) to the polyimide solution obtained in step II. in an amount to obtain a solvent mixture b) as defined before.

If dispersions comprising fillers are prepared, fillers are preferably added after step iii., respectively III.. Alternatively fillers can also be added between steps i. and ii., respectively I. and II..

In order to minimize dissolution time and increase process efficiency it is preferred to carry out step iii. or step II. at a temperature of from 25 to 90°C, more preferred 50 to 70°C. Dissolution of the polyimide can be done easily with technology and equipment known to a man skilled in the art. Preferably preparation and/or storage of the polyimide solution is done under inert conditions.

The polyimide solution of the invention can be used to coat substrates, preferably steel, aluminum, copper and PEEK (polyetheretherketone). Inventors have found that the polyimide solution of the invention can be applied via spray coating, dip-coating, roller coating or with a squeegee.

### Examples

The examples below are intended to illustrate and describe the present invention in more detail but shall not be construed in any way to limit the scope of the claims.

### Preparation of polyimide solutions

A number of polyimide solutions according to the invention and of comparative polyimide solutions were prepared and tested. For production of the polyimide solutions a dry polyimide powder is dissolved with a weight content of up to 25% in different solvent mixtures at 60°C with stirring. The components used and their amounts are summarized in Table 1.

Chemicals used:
P84^{®} type 70 obtained from Evonik Fibres GmbH, Austria
P84^{®} HT obtained from Evonik Fibres GmbH, Austria
Block-co-PI prepared according to example 13 in WO2015/091122

All of the following chemicals were used as lab grade chemicals:
DMSO obtained from abcr GmbH
2-(dimethylamino)ethanol obtained from Merck KGaA
Triethanolamine obtained from Sigma-Aldrich Chemie GmbH
Acetophenone obtained from Merck KGaA
Benzyl alcohol obtained from Sigma-Aldrich Chemie GmbH
Cyclohexanone obtained from Sigma-Aldrich Chemie GmbH
Propylene glycol obtained from Sigma-Aldrich Chemie GmbH
Xylene obtained from Sigma-Aldrich Chemie GmbH
Propylene carbonate obtained from Carl Roth GmbH + Co. KG

### Storage stability

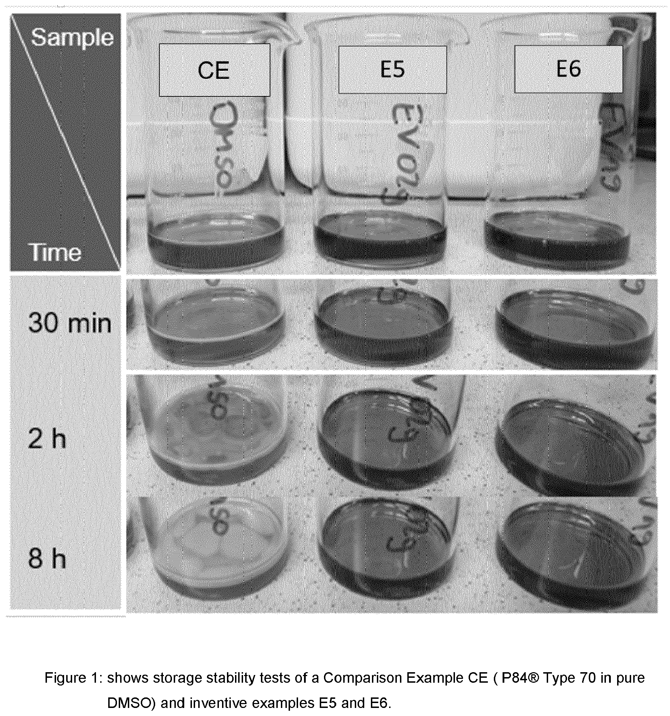

Figure 1 shows storage stability tests of comparison example i.e. a solution of P84^{®} Type 70 in pure DMSO, and inventive examples E5 and E6. The Comparative Example shows a poor storage stability if in contact with air. After 30 min visible skin formation has started. Inventive examples E5 and E6 to the contrary do not show any skin formation even after 8 hours.

### The prepared polyimide solutions were tested as coating solution as follows:

The polyimide solution was applied as coating to a steel or aluminum surface via a doctor blade or after dilution, via a spray coating process. The adhesion of coatings was investigated via cross-hatch tests.

After drying, the tested inventive coatings have shown a quality comparable to coatings prepared by use of P84^{®} Type 70 solutions in NMP. The assessment and comparison of the different coatings was carried out by cross-cutting tests according to ISO 2409

Melting temperatures for different solutions 20% PI solutions were determined via DSC measurements.

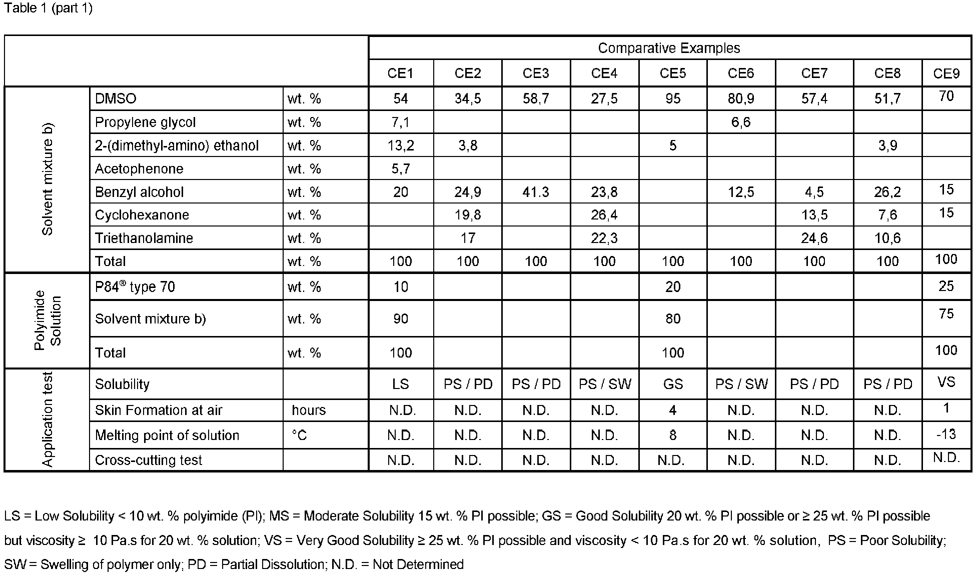

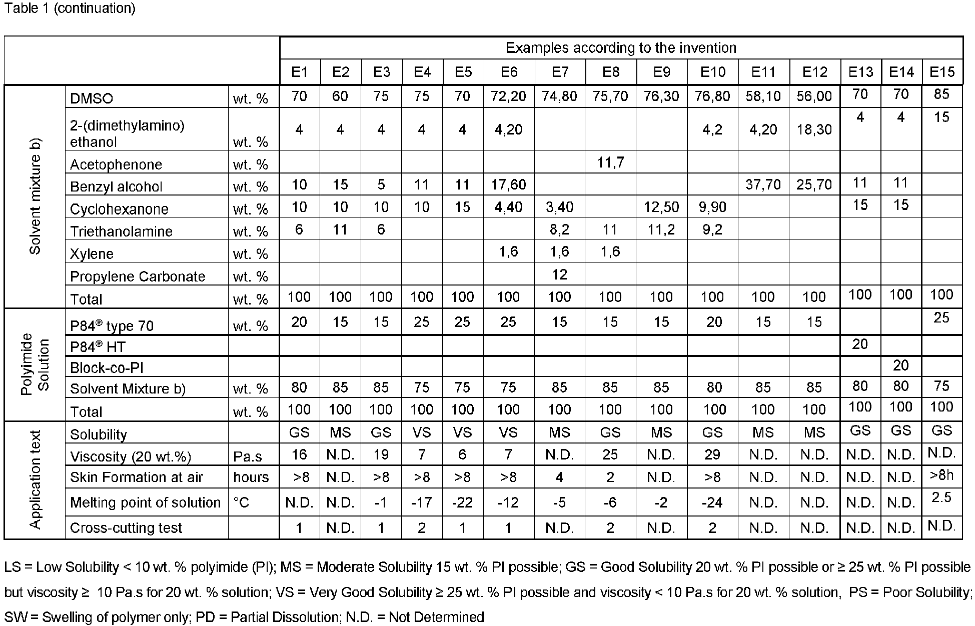

Table 1 shows that none of the polyimide solutions of the comparative examples solves all problems of the present invention. Most comparative solvent mixtures had poor solubility with undissolved polyimides and/or swelling. Inventive example E15 shows that inventive solutions comprising a binary solvent mixture consisting of DMSO and a tertiary alkanolamine in amounts according to the invention, show excellent storage stability, excellent solubility and significantly improved melting point compared to comparative example CE5. CE5 is a direct comparison to E15, i.e. also a binary solvent mixture consisting of DMSO and 2-(dimethylamino) ethanol but with non-inventive contents of both solvents. While both E15 and CE5 show good solubility; CE15 shows skin formation after 4h, indicating that the storage stability is worse if a binary solvent mixture consisting of DMSO and a tertiary alkanolamine is used and if the content of the amine in the solvent mixture is too low. CE9 shows very good solubility and low melting point but skin formation started already after 1 hour. In contrast thereto, all inventive examples have at least moderate but most have good or very good solubility. The inventive examples with good and very good solubility were further tested for their viscosity, skin formation time, melting point and in a cross-cutting test after coating of a substrate. It turned out that all tested inventive examples have a melting point below 0°C. All tested inventive examples have skin formation times of at least two hours, most of more than 8 hours, which is a significant benefit for their application. The viscosities of the tested inventive examples are good or even very good and the quality of the coatings ins the cross-cutting test is also good or very good. Examples E1 to E15 show that the present invention offers high flexibility for a commercial application. While solutions can be provided having very low melting point but limited storage stability (4h), it is also possible to provide solutions with very good storage stability but melting point slightly above 0°C and finally it is also possible to provide solutions with both, very low melting point and excellent storage stability. Thus, a man skilled in the art can choose the right solvent mixture depending on the commercial requirements. In any case, however, the inventive solvents showed good or even very good solubility performance and are classified as non-toxic, which is a significant benefit compared commercially available polyimide solutions in DMF, DMAc, NMP and NEP.

Table 1 confirms that the solvent mixtures of the invention solve all invention and provide significant advantages over prior art solutions as well as commercially available polyimide solutions as well as to alternative polyimide solutions that could be classified non-toxic (CE2 to CE9).

## Claims

1. Polyimide solution comprising
a) One or more polyimides, preferably aromatic polyimides,
b) A solvent mixture comprising
a. 55 to 90 wt. %, preferably 55 to 85 wt. %, more preferred 60 to 80 wt. % dimethylsulfoxide,
b. In sum 0.1 to 20 wt. %, preferably 0.5 to 19 wt. %, more preferred 1 to 15 wt. %, even more preferred 2 to 13 wt. % of one or more primary, secondary and/or tertiary alkanolamine(s) having 3 to 15, preferably 4 to 10, more preferred 4 to 9 carbon atoms,
c. 0 to 40, preferably 0.1 to 25 wt. %, more preferred 1 to 20 wt. %, even more preferred 5 to 15 wt. % benzyl alcohol,
d. 0 to 25 wt. %, preferably 1 to 25 wt. %, and more preferred 2 to 20 wt. % and even more preferred 2 to 15 wt. % cyclohexanone,
e. 0 to 15 wt. %, preferably 0.1 to 10 wt. %, more preferred 0.5 to 8 wt. %, most preferred 1 to 5 wt. % xylene,
f. In sum 0 to 20 wt. %, preferably 1 to 15 wt. %, more preferred 5 to 15 wt. % of acetophenone and/or an alkylene carbonate, preferably propylene carbonate or ethylene carbonate, most preferred propylene carbonate,
g. 0 to 5 wt. %, preferably 0.1 to 5 wt. %, more preferred 0.01 to 3 wt. %, even more preferred 0.001 to 1 wt. %, especially preferred 0 to 0.5 wt.% and most preferred 0 wt.% propylene glycol,
h. In sum 0 to 10 wt. %, preferably 0 to 5 wt. %, more preferred 0 to 3 wt. %, even more preferred 0 to 1 wt.%, especially preferred 0 to 0.1 wt.% and most preferred 0 wt.% DMF, NEP, NMP and/or DMAc,
i. optionally further co-solvents,
wherein the weight percentages given for components a. to i. relate to the total weight of the solvent mixture b),
and
wherein the amounts of components a. to i. are selected such that they total in sum to 100 wt. % of the solvent mixture,
and wherein the polyimide solution comprises in sum 5 to 35 wt.% of component a), referred to the overall weight of the polyimide solution.

2. Polyimide solution according to claim 1, **characterized in that** it comprises components
a., b. and c.
or
a., b. and d.
or
a., b., c. and d.
or
a., b., c., d. and e.
or
a., b., e. and f.
or
a., b., d., e. and f.
wherein the amounts of components a. and b. are selected from the ranges given in claim 1 and wherein the amounts of components c., d., e. and f., if comprised, are selected from the following ranges:
c. 0.1 to 40, preferably 0.1 to 25 wt. %, more preferred 1 to 20 wt. %, even more preferred 5 to 15 wt. %,
d. 1 to 25 wt. %, preferably 1 to 25 wt. %, and more preferred 2 to 20 wt. % and even more preferred 2 to 15 wt. %,
e. 0.1 to 15 wt. %, preferably 0.1 to 10 wt. %, more preferred 0.5 to 8 wt. %, most preferred 1 to 5 wt. %,
f. In sum 1 to 20 wt. %, preferably 1 to 15 wt. %, more preferred 5 to 15 wt. % of acetophenone and/or an alkylene carbonate, preferably propylene carbonate or ethylene carbonate, most preferred propylene carbonate.

3. Polyimide solution according to claim 2, **characterized in that** it consists of components
a., b. and c.
or
a., b. and d.
or
a., b., c. and d.
or
a., b., c., d. and e.
or
a., b., e. and f.
or
a., b., d., e. and f.
wherein the amounts of components a. and b. are selected from the ranges given in claim 1 and wherein the amounts of components c., d., e. and f., if comprised, are selected from the following ranges
c. 0.1 to 40, preferably 0.1 to 25 wt. %, more preferred 1 to 20 wt. %, even more preferred 5 to 15 wt. %,
d. 1 to 25 wt. %, preferably 1 to 25 wt. %, and more preferred 2 to 20 wt. % and even more preferred 2 to 15 wt. %,
e. 0.1 to 15 wt. %, preferably 0.1 to 10 wt. %, more preferred 0.5 to 8 wt. %, most preferred 1 to 5 wt. %,
f. In sum 1 to 20 wt. %, preferably 1 to 15 wt. %, more preferred 5 to 15 wt. % of acetophenone and/or an alkylene carbonate, preferably propylene carbonate or ethylene carbonate, most preferred propylene carbonate,
and wherein the amount of each component is selected such that the amounts of the components total in sum to 100% of the solvent mixture b).

4. Polyimide solution according to claim 1, **characterized in that** the amounts of the components a. to h. are selected such that they total in sum to 100 wt. % of the solvent mixture.

5. Polyimide solution according to any one of claim 1 to 4, **characterized in that** the one or more primary, secondary or tertiary alkanolamine(s) having 3 to 15 carbon atoms are selected from the group consisting of triethanolamine and 2-(dimethylamino)ethanol and mixtures thereof, wherein
- triethanolamine is preferably comprised in an amount of from 0 to 20 wt. %, preferably 0.1 to 15 wt. %, more preferred 1 to 14 wt. %, even more preferred 2 to 13 wt. % and most preferred 3 to 12 wt. %, based on the total weight of the solvent mixture b),
- 2-(dimethylamino)ethanol is preferably comprised in an amount of from 0 to 20 wt.%, more preferred 0.1 to 8 wt. %, even more preferred 1 to 7 wt. %, particular preferred 2 to 6 wt. % and most preferred 3 to 5 wt. %, based on the total weight of the solvent mixture b),
and wherein the amounts of triethanolamine and 2-(dimethylamino)ethanol are selected from the ranges given before such, that both components sum total to 0.1 to 20 wt. %, preferably 0.5 to 19 wt. %, more preferred 1 to 15 wt. %, even more preferred 2 to 13 wt. % of the solvent mixture b).

6. Polyimide solution according to any one of claim 1 to 5, **characterized in that** the polyimide
a) is an aromatic polyimide comprising, identical or different, recurring units of Formula (1) 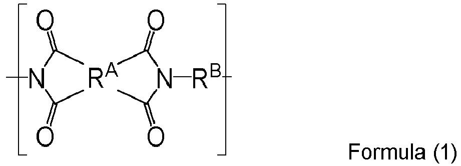 wherein
the functional group R^{A} represents one or more, identical or different, moieties selected from the group consisting of the moieties R^{A1}, R^{A2} and R^{A3} 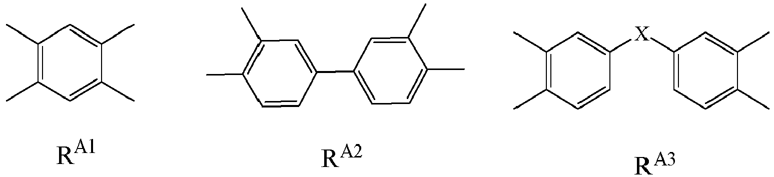 where 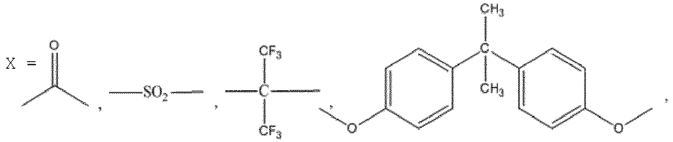 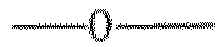
and the functional group R^{B} represents one or more, identical or different moieties selected from the group consisting of the moieties R^{B1}, R^{B2} and R^{B3} 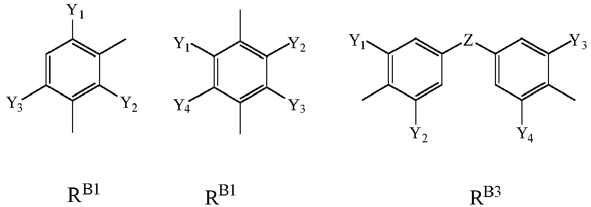 wherein Y₁, Y₂, Y₃ and Y₄ are either H or CH₃ or alkyl radicals with 2 to 4 carbon atoms and Y = -CH₂-, -(CH₃)₂C-, SO₂. -(CF₃)C-. -CO-, -COO-, -CONH-, -O-.

7. Polyimide solution according to claim 6, **characterized in that** at least 90 mol-% of building blocks R^{A} are 3,3',4,4'-benzophenonetetrayl and at least 90 mol-% of building blocks R^{B} are 2,4-toluenediyl, 2,6-toluenediyl or 4,4'-methylenediphenyldiyl, with a molar ratio of 2,4-toluenediyl to 2,6-toluenediyl of from 1 : 9 to 9 : 1 and a molar ratio of the combined amount of 2,4-toluenediyl and 2,6-toluenediyl to the amount of 4,4'-methylenediphenyldiyl of from 70 : 30 to 100 : 0.

8. Polyimide solution according to claim 6, **characterized in that** at least 90 mol-% of building blocks R^{A} are 3,3',4,4'-benzophenonetetrayl or 1,2,4,5-phenylenetetrayl, with a molar ratio of 3,3',4,4'-benzophenonetetrayl to 1,2,4,5-phenylenetetrayl of from 50 : 50 to 95 : 5, preferably of from 55 : 45 to 65 : 35, and at least 90 mol-% of building blocks R^{B} are 2,4-toluenediyl or 2,6-toluenediyl, with a molar ratio of 2,4-toluenediyl to 2,6-toluenediyl of from 1 : 9 to 9 : 1.

9. Polyimide solution according to any one of claim 1 to 5, **characterized in that** the solvent soluble aromatic polyimide is a block-copolyimide comprising, preferably consisting of, the blocks (A) as per the ensuing formulae (3) and (B) as per the ensuing formulae (4): 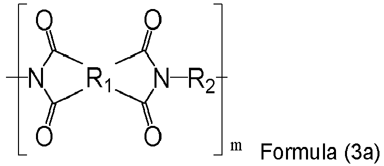 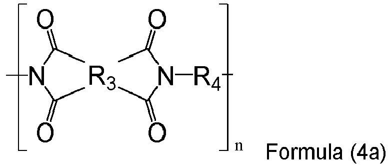 wherein
the functional group R₁ therein comprises either or both of the following functional groups: 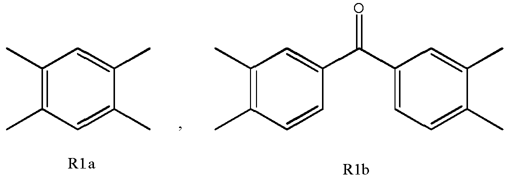
and R₂ comprises at least one or 2 or 3 of the following functional groups 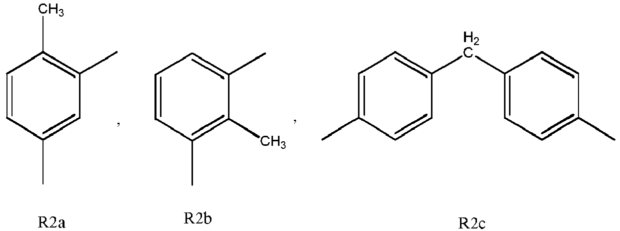 and wherein
R₃ comprises one or more of the following functional groups: 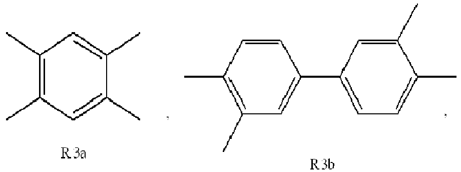 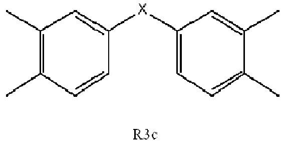 where 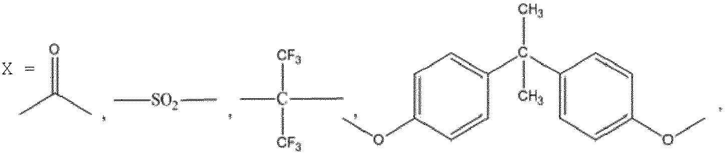 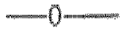
and R4 comprises one or more of the following functional groups 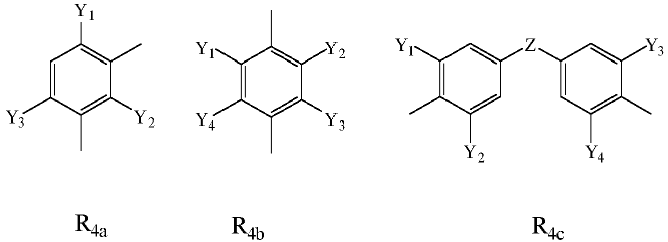
where Y₁, Y₂, Y₃ and Y₄ are either H or CH₃ or alkyl radicals with 2 to 4 carbon atoms and Z = -CH₂-, -(CH₃)₂C-, SO₂. -(CF₃)C-. -CO-, -COO-, -CONH-, -O-, with the proviso that at least one of the radicals Y₁ to Y₄, preferably at least two of the radicals Y₁ to Y₄, more preferably at least three of the radicals Y₁ to Y₄ and most preferably all the radicals Y₁ to Y₄ are equal to CH₃ or a C₂ to C₄ alkyl radical.

10. Polyimide solution according to any one of claim 1 to 9, **characterized in that** it comprises in sum 10 to 30 wt.% and more preferred 15 to 25 wt.% of component a), referred to the overall weight of the polyimide solution.

11. Polyimide solution according to any one of claim 1 to 10, **characterized in that** it comprises in sum 95 to 65 wt.%, preferably 90 to 70 wt.% and more preferred 85 to 75 wt.% of component b), referred to the overall weight of the polyimide solution.

12. Dispersion comprising a polyimide solution according to any one of claim 1 to 11, and further comprising as component c) one or more fillers, preferably selected from the group consisting of graphite, metal sulfides such as molybdenum disulfide and tungsten disulfide, metal oxides such as aluminum oxide, inorganic nitrides such as aluminum nitride, silicon nitride and hexagonal boron nitride, silica, abrasive particles such as cubic boron nitride, diamond.

13. Process for preparation of a polyimide solution, comprising the steps
i. Providing one or more polyimide a), preferably aromatic polyimides
ii. Providing a solvent mixture b) comprising
a. 55 to 90 wt. %, preferably 55 to 85 wt. %, more preferred 60 to 80 wt. % dimethylsulfoxide,
b. In sum 0.1 to 20 wt. %, preferably 0.5 to 19 wt. %, more preferred 1 to 15 wt. %, even more preferred 2 to 13 wt. % of one or more primary, secondary or tertiary alkanolamine(s) having 3 to 15, preferably 4 to 10, more preferred 4 to 9 carbon atoms,
c. 0 to 40 wt.%, preferably 0.1 to 25 wt. %, more preferred 1 to 20 wt. %, even more preferred 5 to 15 wt. % benzyl alcohol,
d. 0 to 25 wt. %, preferably 1 to 25 wt. %,more preferred 2 to 20 wt. % and even more preferred 2 to 15 wt. % cyclohexanone,
e. preferably 0.1 to 10 wt. %, more preferred 0.5 to 8 wt. %, most preferred 1 to 5 wt. % xylene,
f. In sum 0 to 20 wt. %, preferably 1 to 15 wt. %, more preferred 5 to 15 wt. % of acetophenone and/or an alkylene carbonate, preferably propylene carbonate or ethylene carbonate, most preferred propylene carbonate,
g. 0 to 5 wt. %, preferably 0.1 to 5 wt. %, more preferred 0.01 to 3 wt. %, even more preferred 0.001 to 1 wt. %, especially preferred 0 to 0.5 wt.% and most preferred 0 wt.% propylene glycol,
h. In sum 0 to 10 wt. %, preferably 0 to 5 wt. %, more preferred 0 to 3 wt. %, even more preferred 0 to 1 wt.%, especially preferred 0 to 0.1 wt.% and most preferred 0 wt.% DMF, NEP, NMP and/or DMAc,
i. optionally further co-solvents,
wherein the weight percentages given for components a. to i. relate to the total weight of the solvent mixture b),
and
wherein the amounts of components a. to i. are selected such that they total in sum to 100 wt. % of the solvent mixture b).
iii. Dissolving the polyimide i. provided in step i. in the solvent mixture provided in step ii..

14. Process for preparation of a polyimide solution, comprising the steps
I. Providing one or more polyimide a), preferably aromatic polyimides
II. Dissolving the polyimide provided in step I. partially or entirely in DMSO
III. Adding the remaining components of the solvent mixture b) to the polyimide solution obtained in step II. in an amount to obtain a solvent mixture b) comprising
a. 55 to 90 wt. %, preferably 55 to 85 wt. %, more preferred 60 to 80 wt. % dimethylsulfoxide,
b. In sum 0.1 to 20 wt. %, preferably 0.5 to 19 wt. %, more preferred 1 to 15 wt. %, even more preferred 2 to 13 wt. % of one or more primary, secondary or tertiary alkanolamine(s) having 3 to 15, preferably 4 to 10, more preferred 4 to 9 carbon atoms,
c. 0 to 40 wt.%, preferably 0.1 to 25 wt. %, more preferred 1 to 20 wt. %, even more preferred 5 to 15 wt. % benzyl alcohol,
d. 0 to 25 wt. %, preferably 1 to 25 wt. %,more preferred 2 to 20 wt. % and even more preferred 2 to 15 wt. % cyclohexanone,
e. preferably 0.1 to 10 wt. %, more preferred 0.5 to 8 wt. %, most preferred 1 to 5 wt. % xylene,
f. In sum 0 to 20 wt. %, preferably 1 to 15 wt. %, more preferred 5 to 15 wt. % of acetophenone and/or an alkylene carbonate, preferably propylene carbonate or ethylene carbonate, most preferred propylene carbonate,
g. 0 to 5 wt. %, preferably 0.1 to 5 wt. %, more preferred 0.01 to 3 wt. %, even more preferred 0.001 to 1 wt. %, especially preferred 0 to 0.5 wt.% and most preferred 0 wt.% propylene glycol,
h. In sum 0 to 10 wt. %, preferably 0 to 5 wt. %, more preferred 0 to 3 wt. %, even more preferred 0 to 1 wt.%, especially preferred 0 to 0.1 wt.% and most preferred 0 wt.% DMF, NEP, NMP and/or DMAc,
i. optionally further co-solvents,
wherein the weight percentages given for components a. to i. relate to the total weight of the solvent mixture b),
and
wherein the amounts of components a. to i. are selected such that they total in sum to 100 wt. % of the solvent mixture b).

15. Process for preparation of a polyimide solution according to claim 13 or 14, **characterized in that** step iii. or step II. at a temperature of from 25 to 90°C, more preferred 50 to 70°C

16. Use of a polyimide solution according to any one of claims 1 to 12, to coat substrates made from substrates, preferably steel, aluminum, copper and polyetheretherketone.

17. Use of a polyimide solution according to any one of claims 1 to 12 in a process, wherein the polyimide solution is applied via spray coating, dip-coating, roller coating or with a squeegee.
